**Europäisches Patentamt**

**European Patent Office**

**Office européen des brevets**

(11) Numéro de publication: **0 027 414**
**B1**

(12) # FASCICULE DE BREVET EUROPEEN

(45) Date de publication du fascicule du brevet:
**17.08.83**

(51) Int. Cl.³: **B 65 G 25/02**, B 65 G 21/16

(21) Numéro de dépôt: **80401445.4**

(22) Date de dépôt: **09.10.80**

(54) **Dispositif de convoyage permettant de faire virer des casiers.**

(30) Priorité: **12.10.79 FR 7925479**

(43) Date de publication de la demande:
**22.04.81 Bulletin 81/16**

(45) Mention de la délivrance du brevet:
**17.08.83 Bulletin 83/33**

(84) Etats contractants désignés:
**AT BE CH DE FR GB IT LI LU NL SE**

(56) Documents cités:
**DE-B-1 032 164**
**GB-A-812 439**
**US-A-2 149 563**
**US-A-2 493 465**
**US-A-2 957 573**

(73) Titulaire: **CIDELCEM Société Anonyme dite, 5-15, rue Olivier Noyer, F-75014 Paris (FR)**

(72) Inventeur: **Tzifkansky, Guy, 8, avenue Gabriel Péri, F-92260 Fontenay aux Roses (FR)**
Inventeur: **Orcin, Claude, 53, rue du Lavoir, F-10120 Saint André Les Vergers (FR)**
Inventeur: **Marchais, Jean-Claude, 6, avenue Aristide Briand, F-94240 L'Hay Les Roses (FR)**

(74) Mandataire: **Weinmiller, Jürgen et al, Zeppelinstrasse 63, D-8000 München 80 (DE)**

BUNDESDRUCKEREI BERLIN

## Dispositif de convoyage permettant de faire virer des casiers

La présente invention a trait à un dispositif de convoyage permettant de faire virer des casiers et comprenant:

— un moyen de support fixe disposé en arc de cercle dans un plan horizontal,
— et un moyen de support mobile disposé concentriquement et animé par des moyens d'entraînement d'un mouvement transmis par des bielles de part et d'autre du plan du support fixe, de telle sorte que le moyen de support mobile se déplace dans la direction d'avancement quand il est situé au-dessus du plan du support fixe.

Un tel dispositif est décrit par exemple dans le brevet américain n° 2 957 573.

Ce dispositif comporte deux groupes alternés de barres cambrées dont l'une est mobile et l'autre peut être fixe et permet de faire virer des casiers de n'importe quelle dimension. Mais dans un domaine d'application, par exemple le domaine de l'alimentation, où il est nécessaire d'observer de nombreuses prescriptions d'hygiène, ce dispositif n'est pas utilisable. En effet, le nettoyage des barres est délicat, il en est de même de l'espace situé sous les barres.

Le dispositif selon l'invention est de construction plus simple et permet un nettoyage plus aisé répondant ainsi aux prescriptions d'hygiène indispensables dans certains domaines tels que le domaine alimentaire.

Le dispositif selon l'invention est caractérisé en ce qu'il comporte:

— un guide extérieur et un guide intérieur en regard l'un de l'autre formés chacun d'une portion de cylindre ayant sensiblement le même axe vertical et définissant un canal,
— un moyen additionnel de support constitué par des rouleaux fous dont les axes sont disposés à l'intérieur du canal dans un plan horizontal le long du guide intérieur, de telle sorte que les directrices les plus hautes des rouleaux fous soient dans le plan du support fixe,
le moyen de support fixe étant disposé le long du guide extérieur à l'intérieur du canal, et le moyen de support mobile étant disposé à l'intérieur du canal au voisinage du guide extérieur.

Ainsi, les casiers dont le gabarit s'inscrit entre guide extérieur et guide intérieur reposent normalement sur le support fixe et sur les rouleaux fous.

Lorsque le support mobile s'élève, il relève le côté du casier proche du guide extérieur le soulevant du support fixe tandis que le côté proche du guide intérieur reste posé sur les rouleaux.

Lorsque le support mobile s'avance, il fait tourner la partie du casier proche du guide extérieur tandis que l'autre partie proche du guide intérieur glisse et roule sur les rouleaux fous donnant au casier un mouvement de translation et de pivotement autour de l'axe vertical des guides.

Selon une réalisation préférentielle de l'invention les moyens d'entraînement comportent

— un moteur disposé à l'intérieur du guide intérieur qui lui sert de carénage, des manivelles horizontales rayonnant à partir du moteur entrainées en rotation, et
les bielles verticales chacune étant articulée à une extrémité sur la manivelle et fixée à l'autre extrémité au support mobile.

Ainsi la réalisation du dispositif est particulièrement simple et l'encombrement minimum puisque d'une part le moteur est disposé dans un espace perdu à l'intérieur du guide intérieur et ce guide lui sert de carénage et d'autre part en raison de la disposition centrale du moteur par une construction symétrique des moyens de transmission du mouvement on peut imprimer le mouvement de bielle au support mobile.

De préférence le dispositif de convoyage comporte d'une part un fond disposé entre les guides extérieur et intérieur et percé par des ouvertures rectangulaires dont les bords sont relevés pour empêcher l'eau de passer à travers le fond, deux desdits bords opposés étant munis à leur sommet de tiges horizontales de longueur supérieure auxdits bords et d'autre part, associé à chaque ouverture, un patin traversé par la bielle et muni intérieurement d'une gouttière à l'intérieur de laquelle sont emprisonnées les tiges solidaires des bords de l'ouverture de façon que le patin bien qu'animé d'un mouvement de translation alternatif horizontal au-dessus du fond couvre toujours l'ouverture.

Ainsi l'étanchéité et la sécurité sont obtenues au niveau de la traversée du fond par les bielles.

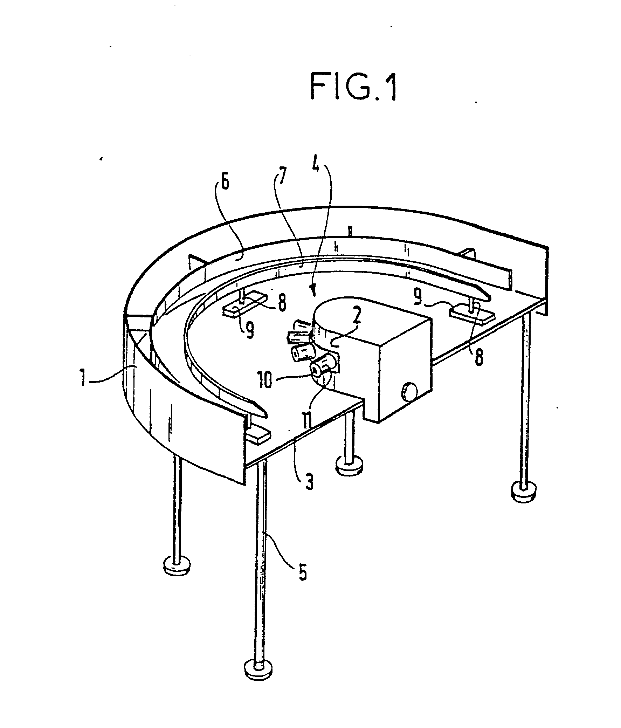

La présente invention sera mieux comprise à la lumière de la description dans laquelle la figure 1 représente une perspective du dispositif de convoyage selon l'invention.

La figure 2 représente une vue de dessus de ce dispositif.

La figure 3 représente une perspective des patins associés aux bielles du dispositif selon l'invention.

Les figures 4A, 4B à 7A, 7B représentent les positions successives des divers éléments lors du mouvement de bielle du support mobile du dispositif selon l'invention.

Le dispositif selon l'invention représenté à la figure 1 comporte deux demis-cylindres de même axe vertical disposés en regard formant un guide extérieur 1 et un guide intérieur 2.

Les guides 1 et 2 sont reliés par un fond horizontal 3 en forme de demie-couronne définissant avec les guides un canal 4.

Le canal est monté sur des pieds 5.

Dans le canal 4 le long du guide extérieur 1 est fixé un support fixe horizontal 6 en forme de demi-cercle.

Au voisinage du guide extérieur 1 mais plus éloigné du support fixe 6 est disposé un support mobile 7 également en forme de demi-cercle.

Le support mobile 7 est porté par 3 bielles verticales 8 traversant des patins 9 disposés au dessus du fond 3. Ces bielles sont situées sensiblement à 0°, 90° et 180° par rapport à l'axe des guides.

Sur le guide intérieur 2 sont fixés régulièrement une suite d'axes 10 situés dans un même plan horizontal.

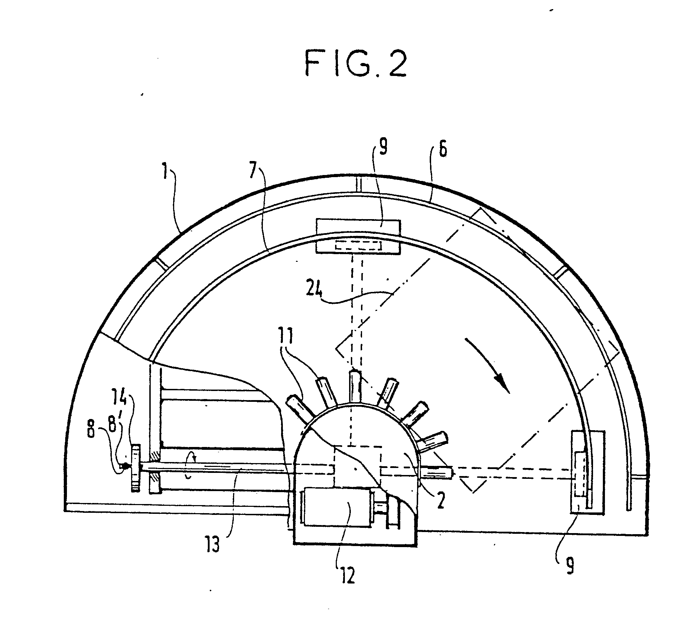

Autour de ces axes 10 sont disposés des rouleaux fous 11 dont les directrices les plus hautes sont dans le même plan horizontal que celui du support fixe 6. Les casiers 24 qui doivent virer ont une forme carrée et leur gabarit s'inscrit dans le canal 4 (voir figure 2).

Un moteur 12 est disposé à l'intérieur du guide intérieur 2 (voir figure 2).

Sur la figure 2 qui représente une vue de dessus du dispositif selon l'invention on voit que du moteur 12 partent 3 axes horizontaux 13 terminés par des roues 14 qui tournent autour de ces axes. Sur chaque roue 14 au voisinage de la périphérie est articulée l'extrémité 8' d'une bielle 8 dont l'autre extrémité est fixée au support mobile 7.

Chaque axe 13 avec sa roue associée 14 forme une manivelle.

Lorsque l'extrémité 8' est dans le plan de l'axe 13 le support mobile se trouve dans le plan du support fixe 6.

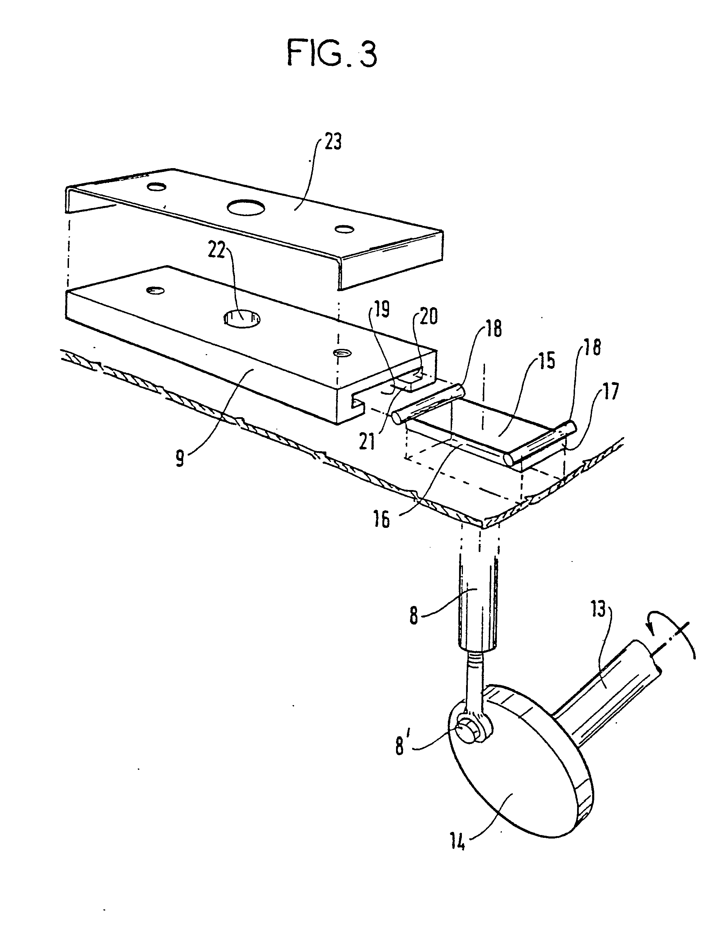

Au niveau de chaque bielle 8 le fond est percé d'une ouverture rectangulaire 15 dont les bords 16 sont relevés de façon à ce que l'eau qui se trouve sur le fond 3 ne s'écoule pas par les ouvertures 15 (voir figure 3).

Au sommet des bords 17 s'appuyant sur les petits côtés de chaque ouverture 15 sont montés 2 tiges 18 plus longues que les bords 17.

Le patin 9 est un parallélépipède muni intérieurement d'une gouttière 19 légèrement plus large à sa partie haute 20 que les tiges 18, et légèrement plus large que les bords 17 à sa partie basse 21 de façon à ce que les tiges 18 soient emprisonnées dans la partie haute 20 de la gouttière 19.

Le patin 9 est en son centre muni d'une ouverture circulaire 22 à travers laquelle passe la bielle 8.

Ce patin est recouvert d'une plaque 23 qui vient recouvrir les orifices de la gouttière 19 qui débouchent sur les petites faces du patin.

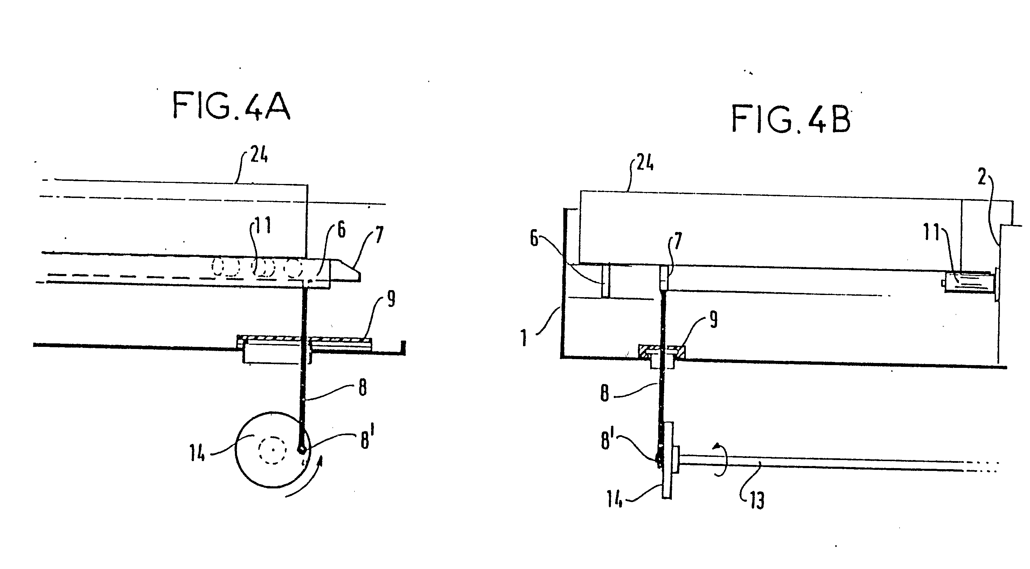

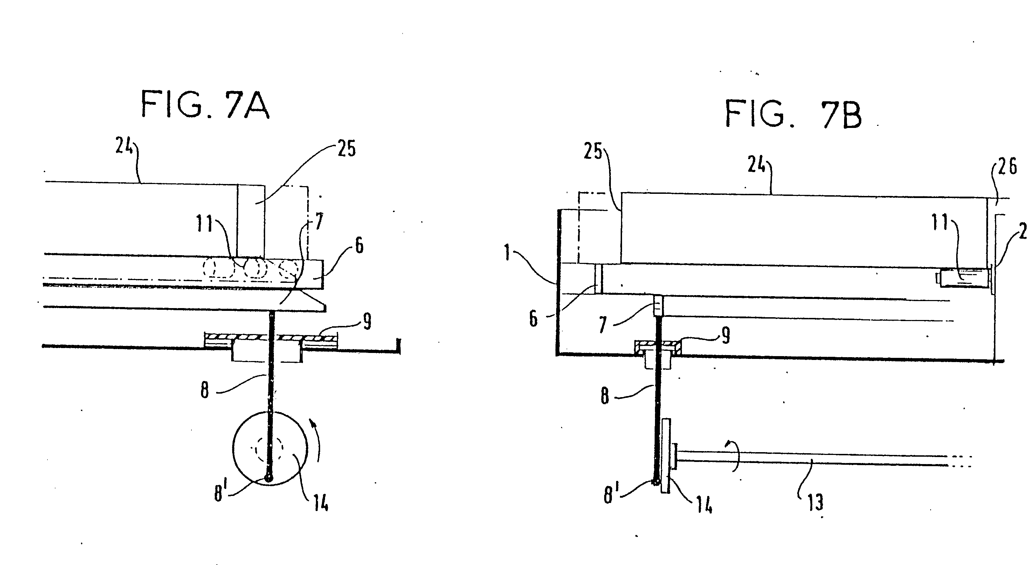

Le fonctionnement du dispositif est explicité aux figures 4A, 4B à 7A, 7B.

Sur les figures 4A à 7A on regarde de face la roue 14 associée à la bielle située à l'entrée du canal 4.

Sur les figures 4B à 7B on regarde cette roue par la tranche.

En 4A, 4B le support mobile 7 est situé dans le même plan horizontal que le support fixe 6 et les directrices hautes des rouleaux fous 11.

Le casier 24 est posé sur le support fixe 6 et les rouleaux 11.

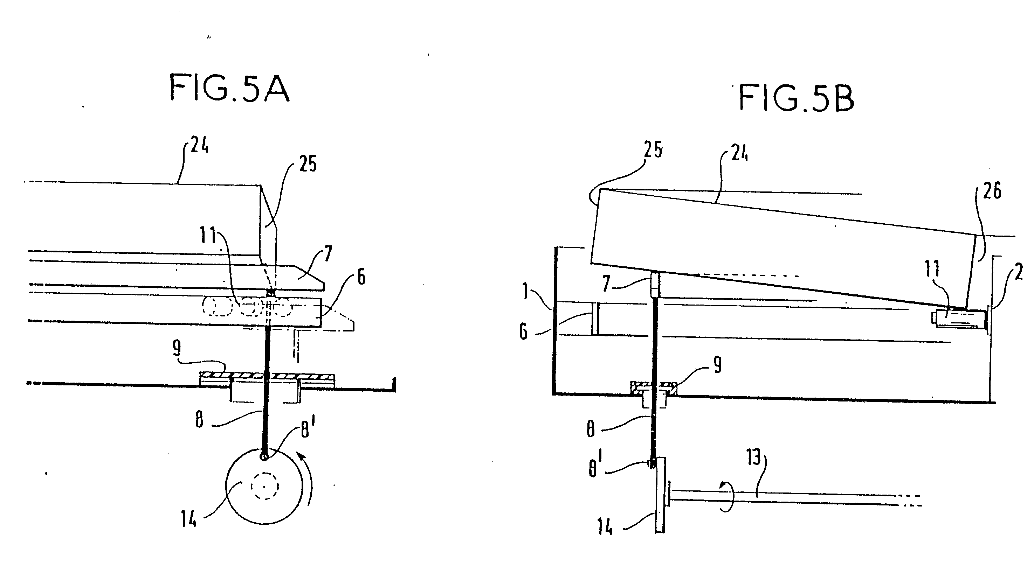

Lorsque la bielle 8 s'élève en s'avançant (figure 5A, 5B) (le point d'articulation 8' de la bielle 8 sur la roue décrit un angle de 90°) le support mobile lève la partie 25 du casier proche du guide extérieur 1 tandis que la partie 26 du casier proche du guide intérieur 2 repose sur les rouleaux 11. Pendant que ce mouvement se continue la partie 26 décrit un arc de cercle mais de petit rayon en glissant et roulant sur les rouleaux 11. Dans ce mouvement les coins du casier de la partie 25 sont guidés par le guide extérieur 1 tandis que le bord du casier opposé à ces coins peut venir buter sur le guide intérieur 2. Pendant ce mouvement le patin 9 s'avance.

La bielle 8 s'abaisse en s'avançant (le point d'articulation 8' de la bielle 8 sur la roue 14 décrit un arc de 90°), le patin 9 continue à s'avancer et le casier 24 continue le même mouvement que décrit au paragraphe précédent.

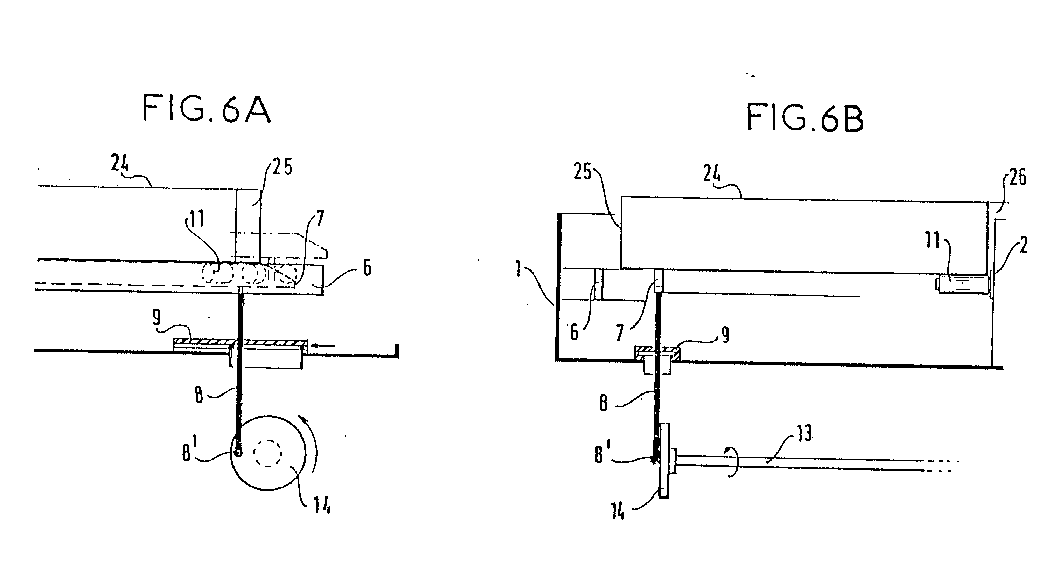

Lorsque le support mobile 7 revient au niveau du support fixe 6 le casier 24 vient se poser sur le support fixe 6 (figure 6A, 6B).

Pendant que le point d'articulation 8' décrit les 180° restants la bielle 8 et le patin 9 associé reculent, le support mobile 7 restant dans un plan inférieur au plan du support fixe 6 (voir figure 7A, 7B).

Le mouvement de la bielle 8 continue et à chaque rotation de la roue 14, le casier 24 est avancé dans le canal 4 d'un arc de cercle déterminé.

Au bout de plusieurs rotations le casier 24 à ainsi parcouru les 180° constituant le canal 4.

On comprend que plus le support mobile 7 est proche du guide extérieur 1 plus l'arc de cercle dont à tourné le casier sera grand on a donc intérêt à mettre ce support le plus proche possible du guide extérieur 1.

De toute façon il est nécessaire que le support mobile 7 soit nettement plus proche du guide extérieur 1 que du guide intérieur 2 sinon le casier risquerait de basculer en restant en appui sur le support fixe 6 pendant tout le mouvement et il n'avancerait pas.

A l'entrée du dispositif de convoyage selon l'invention on peut brancher un convoyeur amenant les casiers tandis qu'à la sortie on dispose un convoyeur emmenant les casiers, la mise du casier sur le dispositif de l'invention et son enlevée pouvant se faire soit automatiquement soit même manuellement.

**Revendications**

1. Dispositif permettant de faire virer des casiers (24) comprenant:

— un moyen de support fixe (6) disposé en arc de cercle dans un plan horizontal,

— et un moyen de support mobile (7) disposé concentriquement et animé par des moyens d'entraînement d'un mouvement transmis par des bielles de part et d'autre du plan du support fixe, de telle sorte que le moyen de support mobile se déplace dans la direction d'avancement quand il est situé au-dessus du plan du support fixe, caractérisé en ce qu'il comporte:

— un guide extérieur (1) et un guide intérieur (2) en regard l'un de l'autre formés chacun d'une portion de cylindre ayant sensiblement le même axe vertical et définissant un canal (4),

— un moyen additionnel de support constitué par des rouleaux fous (11) dont les axes (10) sont disposés à l'intérieur du canal (4) dans un plan horizontal le long du guide intérieur (2), de telle sorte que les directrices les plus hautes des rouleaux fous soient dans le plan du support fixe,

le moyen de support fixe (6) étant disposé le long du guide extérieur (1) à l'intérieur de canal (4),

et le moyen de support mobile (7) étant disposé à l'intérieur du canal (4) au voisinage du guide extérieur (1).

2. Dispositif de convoyage permettant de faire virer des casiers selon la revendication 1, caractérisé en ce que les moyens d'entraînement comportent un moteur (12) disposé à l'intérieur du guide intérieur (2) qui lui sert de carénage, des manivelles horizontales (13) (14) rayonnant à partir du moteur entraînées en rotation, et les bielles verticales (8), chacune étant articulée à une extrémité (8') sur la manivelle (13) (14) et étant fixée à l'autre extrémité au support mobile (7).

3. Dispositif de convoyage permettant de faire virer des casiers selon la revendication 2, caractérisé en ce qu'il comporte d'une part un fond (3) disposé entre les guides extérieur (1) et intérieur (2) et percé par des ouvertures (15) dont les bords (16, 17) sont relevés pour empêcher l'eau de passer à travers le fond, deux desdits bords (17) opposés étant munis à leur sommet de tiges horizontales (18) de longueur supérieure auxdits bords (17) et d'autre part, associé à chaque ouverture (15), un patin (9) traversé par la bielle (8) et muni intérieurement d'une gouttière (20) à l'intérieur de laquelle sont emprisonnées les tiges (18) solidaires des bords (17) de l'ouverture (15) de façon que le patin (9) bien qu'animé d'un mouvement de translation alternatif horizontal au-dessus du fond couvre toujours l'ouverture (15).

**Patentansprüche**

1. Vorrichtung zur Eckführung von Kästen (24), die aufweist:

— ein festes Trägermittel (6), das im Kreisbogen in einer horizontalen Ebene angeordnet ist,

— und ein bewegliches Trägermittel (7), das konzentrisch angeordnet ist und von Antriebsmitteln über Kurbelstangen zu einer Bewegung auf beiden Seiten der Ebene des festen Trägers angetrieben wird, so daß das bewegliche Trägermittel sich in der Vorschubrichtung verschiebt, wenn es sich oberhalb der Ebene des festen Trägers befindet, dadurch gekennzeichnet, daß sie aufweist:

— eine äußere Führung (1) und eine innere Führung (2), die sich gegenüberliegen, je aus einem Zylinderabschnitt bestehen, im wesentlichen die gleiche senkrechte Achse haben und einen Kanal (4) definieren,

— ein zusätzliches Trägermittel bestehend aus frei beweglichen Rollen (11), deren Achsen (10) im Inneren des Kanals (4) in einer horizontalen Ebene entlang der inneren Führung (2) angeordnet sind, so daß die höchsten Mantelflächen der frei beweglichen Rollen sich in der Ebene des festen Trägers befinden, wobei das feste Trägermittel (6) entlang der äußeren Führung (1) im Inneren des Kanals (4) angeordnet ist und das bewegliche Trägermittel (7) im Inneren des Kanals (4) in der Nähe der äußeren Führung (1) angeordnet ist.

2. Fördervorrichtung, die es ermöglicht, Kästen gemäß dem Anspruch 1 um die Ecke zu schwenken, dadurch gekennzeichnet, daß die Antriebsmittel einen Motor (12), der innerhalb der inneren Führung (2) angeordnet ist, welche ihm als Verkleidung dient, waagrechte Kurbeln (13) (14), die strahlenförmig vom Motor ausgehen, und die senkrechten Kurbelstangen (8) aufweisen, von denen jede an einem Ende (8') an der Kurbel (13) (14) gelenkig befestigt und mit dem anderen Ende am beweglichen Träger (7) befestigt ist.

3. Fördervorrichtung, die es ermöglicht, Kästen um die Ecke zu schwenken gemäß Anspruch 2, dadurch gekennzeichnet, daß sie einerseits einen Boden (3) aufweist, der zwischen den äußeren (1) und inneren Führungen (2) angeordnet ist und Öffnungen (15) besitzt, deren Ränder (16, 17) nach oben umgebogen sind, um das Wasser daran zu hindern, durch den Boden zu fließen, wobei zwei gegenüberliegende dieser Ränder (17) an ihrer Oberkante mit waagerechten Stäben (18) ausgerüstet sind, deren Länge größer ist als die der Ränder (17), und andererseits zu jeder Öffnung (15) gehörend ein Gleitstück (9) aufweist, das von der Kurbelstange (8) durchquert wird und innen mit einer Rille (20) versehen ist, in deren Innerem die mit den Rändern (17) der Öffnung (15) fest verbundenen Stäbe (18) eingeschlossen sind, so daß das Gleitstück (9), obwohl es durch eine translatorische horizontale Hin- und Herbewegung oberhalb des Bodens bewegt wird, immer die Öffnung (15) bedeckt.

## Claims

1. A device for letting containers (24) take a turn, comprising:

— a fixed support means (6) disposed in an arc of a circle in a horizontal plane,
— and a mobile support means (7) disposed concentrically and driven by push-rod drive means to perform a movement on either side of the plane of the fixed support, such that the mobile support means moves into the advance direction when it is situated above the plane of the fixed support, characterized in that it comprises:
— an outer guide (1) and an inner guide (2) facing each other, each having the shape of a cylinder portion with essentially the same vertical axis and defining a channel (4),
— an additional support means constituted by idle rollers (11) the axes of which (10) are disposed inside the channel (4) in a horizontal plane along the inner guide (2), such that the highest envelope surface of the idle rollers is in the plane of the fixed support,
the fixed support means (6) being disposed along the outer guide (1) inside the channel (4),
and the mobile support means (7) being disposed inside the channel (4) near the outer guide (1).

2. A conveying device for letting containers take a turn according to claim 1, characterized in that the drive means comprise a motor (12) disposed inside the inner guide (2), which serves as its carter, horizontal cranks (13) (14) radiating from the motor and driven into rotation, and the vertical push-rods (8), each being articulated at one end (8') on the crank (13) (14) and being fixed at the other end to the mobile support (7).

3. A conveying device for letting containers take a turn according to claim 2, characterized in that it comprises on the one and a bottom (3) disposed between the outer (1) and the inner guides (2) and provided with openings (15), the rims (16, 17) of which are raised in order to prevent the water from passing through the bottom, two of said rims (17) opposite each other being provided at their upper ends with horizontal stems (18) of a length superior to that of said rims (17), and that it comprises on the other hand, associated to each opening (15), a slider (9) traversed by the crank (8) and furnished internally with a groove (20) in which are emprisoned the stems (18) integral with the rims (17) of the opening (15), such that the slider (9), although being driven by a horizontal alternating translation movement above the botton, still covers the opening (15).

# FIG.1

# FIG.2

# FIG.3

# FIG.4A

# FIG.4B

# FIG.5A

# FIG.5B

0 027 414

# FIG.6A

# FIG.6B

0 027 414

FIG. 7A

FIG. 7B

24 25 11 7 6 9 8 8' 14

25 24 26 1 11 2 6 7 9 8 8' 14 13

0 027 414